# FASCICULE DE BREVET EUROPEEN

(11) **EP 0 799 759 B1**
(45) Date de publication et mention de la délivrance du brevet: **16.05.2001**
(21) Numéro de dépôt: 97400714.8
(22) Date de dépôt: 28.03.1997
(51) Int. Cl.: B62D 29/04

(54) **Dispositif de retenue d'une aile plastique sur une caisse métallique**
Einrichtung zum Halten eines Plastik-Kotflügels an einem metallenen Fahrzeugteil
Device for carrying a plastic mud guard on a metallic body

(30) Priorité: 05.04.1996 FR 9604318
(43) Date de publication de la demande: 08.10.1997
(73) Titulaire: RENAULT, 92109 Boulogne-Billancourt (FR)
(72) Inventeur: Ginestet, Thierry, 78180 Montigny le Bretonneux (FR)

(56) Documents cités:
- EP-A- 0 346 237
- FR-A- 2 720 794
- US-A- 4 707 020
- US-A- 5 098 765
- US-A- 5 429 412

## Description

L'invention concerne un dispositif de retenue d'un élément plastique de carrosserie, notamment une aile plastique de véhicule automobile sur un support métallique. L'invention concerne plus particulièrement un dispositif de retenue selon le préambule de la revendication 1 d'un élément plastique de carrosserie sur un support métallique dont le coefficient de dilatation est inférieur à celui dudit élément plastique, tel qu'il est décrit dans l'état de la technique le plus proche représenté dans US-A-4 707 020.

Certains modèles de véhicules automobiles sont équipés d'ailes en matière plastique. Les coefficients de dilatation étant différents entre la matière plastique constituant les ailes et l'acier constituant la structure, on constaté, lors de l'application d'un traitement de surface nécessitant une augmentation de température, par exemple lors de la cuisson d'une peinture, un déplacement important de l'aile par rapport à la structure puis son retour, lors du refroidissement, en position initiale. Les dispositifs de retenue utilisés avec des ailes en acier ne sont donc pas utilisables tels quels pour la fixation des ailes en matière plastique, car ils imposeraient au plastique des contraintes rédhibitoires.

La publication FR-A-2720794 décrit un dispositif de retenue d'un élément plastique de carrosserie sur un support métallique dans lequel une agrafe de fixation dudit élément plastique sur le support dont le coefficient de dilatation est inférieur à celui de l'élément plastique, est constituée notamment par une base de fixation, la base de fixation portant perpendiculairement des languettes d'appui sur l'élément plastique, lesdites languettes étant solidaires d'une entretoise munie d'un trou de passage d'une vis de fixation. Un tel dispositif permet, après la fixation de l'aile sur la caisse, lors du montage, la libre dilatation de ladite aile lors d'un traitement de surface nécessitant une augmentation de température. En effet, à froid, les bords latéraux intérieurs de l'aile épousent les bords latéraux de l'agrafe assurant ainsi, non seulement un blocage de l'aile dans la direction latérale mais aussi dans la direction longitudinale du véhicule. Lors de l'échauffement, l'aile subit une dilatation selon toutes ses dimensions donc en particulier selon sa dimension latérale. Ainsi, dès le début de la dilatation, les bords latéraux intérieurs de l'aile s'écartent des bords latéraux de l'agrafe autorisant ensuite la dilatation longitudinale de l'aile, dilatation longitudinale qui est bien plus importante que la dilatation latérale du fait de la forme même de l'aile. Après refroidissement, l'aile reprend la position à laquelle elle a été fixée lors du montage. Néanmoins, les variations de température provoquent un retrait supplémentaire du plastique en deçà des dimensions initiales de l'aile, retrait qui n'intervient qu'après refroidissement, alors que l'aile est à nouveau bloquée longitudinalement sur l'agrafe. Ce retrait provoque, dans le cas d'une aile avant, un écartement de l'extrémité arrière de ladite aile par rapport à l'extrémité avant de la porte avant, entraînant une augmentation disgracieuse du jeu d'aspect existant entre l'aile et la porte.

Le dispositif selon l'invention vise à palier cet inconvénient. A cet effet, l'invention concerne un dispositif de retenue d'un élément plastique de carrosserie sur un support métallique dont le coefficient de dilatation est inférieur à celui dudit élément plastique, le dispositif étant du type comportant un élément profilé monté à l'intérieur de l'élément plastique. Le dispositif est caractérisé en ce que l'élément profilé est solidarisé au support métallique par l'intermédiaire de moyens de liaison permettant un déplacement dudit élément profilé par rapport audit support métallique.

Selon une autre caractéristique de l'invention, les moyens de liaison sont constitués par un patin fixé sur le support métallique, l'élément profilé étant monté à translation sur ledit patin et rappelé en butée par des moyens élastiques.

Cette caractéristique procure à l'élément plastique une liberté en translation par rapport au support métallique, et ce, après le refroidissement dudit élément plastique, ce qui permet de prendre en compte le retrait supplémentaire du plastique intervenant après refroidissement.

Selon une autre caractéristique de l'invention, le patin dépasse de la face inférieure de l'élément profilé par une languette destinée à rentrer dans une première rainure pratiquée sur la partie de l'élément plastique assurant la fixation sur le support métallique.

Cette caractéristique permet la libre dilatation du plastique qui, ainsi, n'est pas directement en contact avec le support métallique.

Selon une autre caractéristique de l'invention, l'élément profilé comporte un tenon destiné à venir se clipser au fond d'une seconde rainure convergente pratiquée sur la paroi correspondante de l'élément plastique.

Cette caractéristique permet de solidariser le dispositif de fixation sur l'élément plastique à fixer, préalablement à son montage sur l'élément métallique ce qui facilite les manipulations.

Selon une autre caractéristique de l'invention, les moyens élastiques sont constitués par une lame élastique réalisée d'une seule pièce avec l'élément profilé, ladite lame élastique coopérant avec une protubérance située à la surface du patin.

La lame élastique peut ainsi être obtenue par moulage en une seule pièce avec la partie profilée, ce qui est particulièrement simple et économique.

Selon une autre caractéristique de l'invention, l'élément profilé est monté à translation sur le patin par l'intermédiaire d'une queue d'aronde.

Selon une autre caractéristique de l'invention, le patin est fixé sur le support métallique au moyen d'une vis traversant un trou dudit support métallique pour se visser dans un trou fileté pratiqué dans ledit patin.

D'autres caractéristiques et avantages apparaîtront à la lecture de la description d'un exemple de dispositif selon l'invention, en référence aux dessins dans lesquels :
- la figure 1 est une vue en perspective éclatée du montage de l'aile sur le support au moyen du dispositif de fixation selon l'invention,
- la figure 2 est une vue en coupe verticale du dispositif de fixation selon l'invention,
- la figure 3 est une vue en coupe horizontale du dispositif de fixation selon l'invention,
- la figure 4 est une vue en coupe verticale de l'aile montée avant dilatation,
- la figure 5 est une vue en coupe horizontale de l'aile avant dilatation,
- la figure 6 est une vue en coupe horizontale de l'aile en cours de dilatation,
- la figure 7 est une vue en coupe horizontale de l'aile après son refroidissement,
- la figure 8 est une vue en coupe horizontale de l'aile après le retrait supplémentaire.

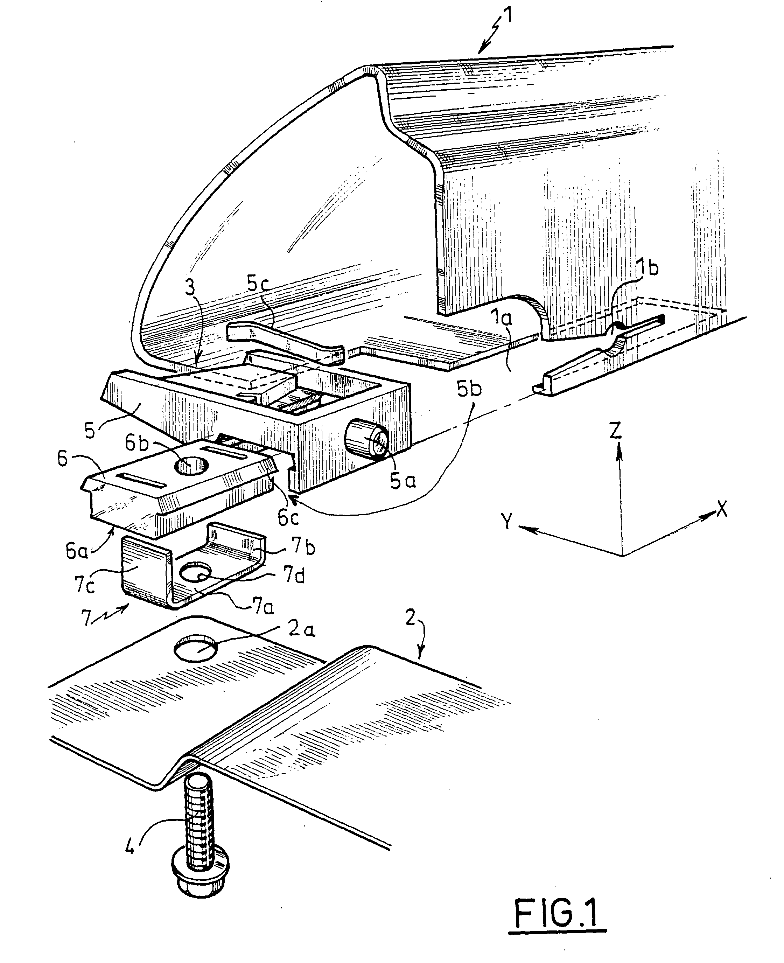

La figure 1 schématise le montage d'une aile plastique 1 sur un support métallique 2 à l'aide d'un dispositif de fixation 3 et d'une vis 4. Le dispositif de fixation 3 est constitué d'un élément profilé 5 dont la forme extérieure épouse la forme intérieure de l'aile 1 et d'un patin 6 monté en translation sur la face inférieure de l'élément profilé 5, dans la direction de l'axe des X correspondant à la longueur du véhicule. Le patin 6 dépasse de la face inférieure de l'élément profilé 5 par une languette 6a destinée à rentrer dans une première rainure la pratiquée sur la partie horizontale de l'aile en contact avec le support métallique 2. L'élément profilé 5 comporte latéralement un tenon 5a destiné à venir se clipser au fond d'une seconde rainure 1b convergente pratiquée sur la paroi latérale correspondante de l'aile 1.

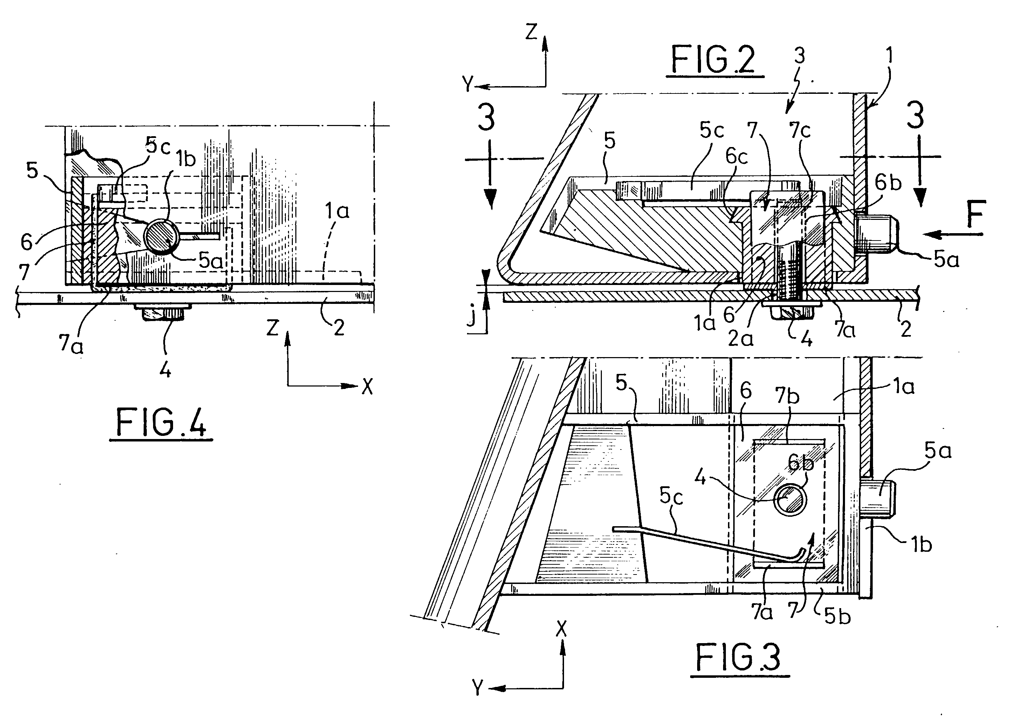

Une variante particulière de réalisation du dispositif de fixation 3 est détaillée sur les figures 2 et 3 : l'élément profilé 5 est monté à translation sur le patin 6 par l'intermédiaire d'une queue d'aronde 6c. Le patin 6 est percé par un trou vertical 6b débouchant. L'élément profilé 5 est rappelé en translation sur le patin 6 contre une butée 5b appartenant audit élément profilé 5, dans la direction des X négatifs, par des moyens élastiques. Selon la variante particulière représentée sur les figures, ces moyens consistent en une lame élastique 5c. On a représenté une lame élastique 5c rapportée pour faciliter la compréhension mais il est clair que ladite lame 5c pourrait être réalisée d'une seule pièce avec l'élément profilé 5, par exemple par moulage. Dans cette variante, une agrafe 7 en forme de « U » constituée d'une âme 7a reliant une petite aile 7b et une grande aile 7c, l'âme 7a étant percée d'un trou 7d, est montée dans le patin 6. Les deux ailes 7b,7c sont enfoncées dans des rainures verticales dudit patin 6 de manière à amener l'âme 7a contre la languette 6a et à faire coïncider les trous 6b et 7d. La grande aile 7c dépasse au dessus du corps du patin 6 de manière à accrocher la lame 5c et maintenir ainsi l'élément profilé 5 sur le patin 6. Il est bien clair que tout autre moyen élastique conviendrait également, comme par exemple un ressort reliant le patin 6 à l'élément profilé 5.

Le dispositif de fixation 3 ainsi constitué est monté sur l'aile 1 emboîté dans la première rainure 1a de l'aile 1 par la languette 6a du patin 6 jusqu'à ce que le téton 5a vienne se clipser au fond de la seconde rainure 1b de l'aile 1, solidarisant ainsi le dispositif de fixation 3 et l'aile 1. L'ensemble ainsi constitué peut être manipulé et amené sur le support métallique 2 sans précaution particulière. On réalise alors la fixation de l'aile 1 sur le support métallique 2 à l'aide d'une vis 4 vissée à travers un trou 2a du support métallique 2 dans le trou 6b du patin 6. Dans l'exemple représenté sur les figures, le vissage proprement dit a lieu entre les filets de la vis 4 et la tôle constituant les bords du trou 7d de l'agrafe 7, le trou 6b ne servant qu'au passage de la vis 4. Mais il est clair que l'on peut également envisager une variante simplifiée dépourvue d'agrafe 7 dans laquelle le vissage est réalisé directement dans le trou 6b. L'ajustement des jeux entre l'aile 1, le capot et la porte (non représentés) est réalisé grâce à un diamètre du trou 2a supérieur à celui de la vis 4. Les épaisseurs des languettes 6a du patin 6 et de l'âme 7a sont choisies de manière à ce que leur somme soit supérieure à l'épaisseur locale de l'aile 1 permettant à celle-ci de ne pas reposer sur la carrosserie 2 au niveau du trou 2a.

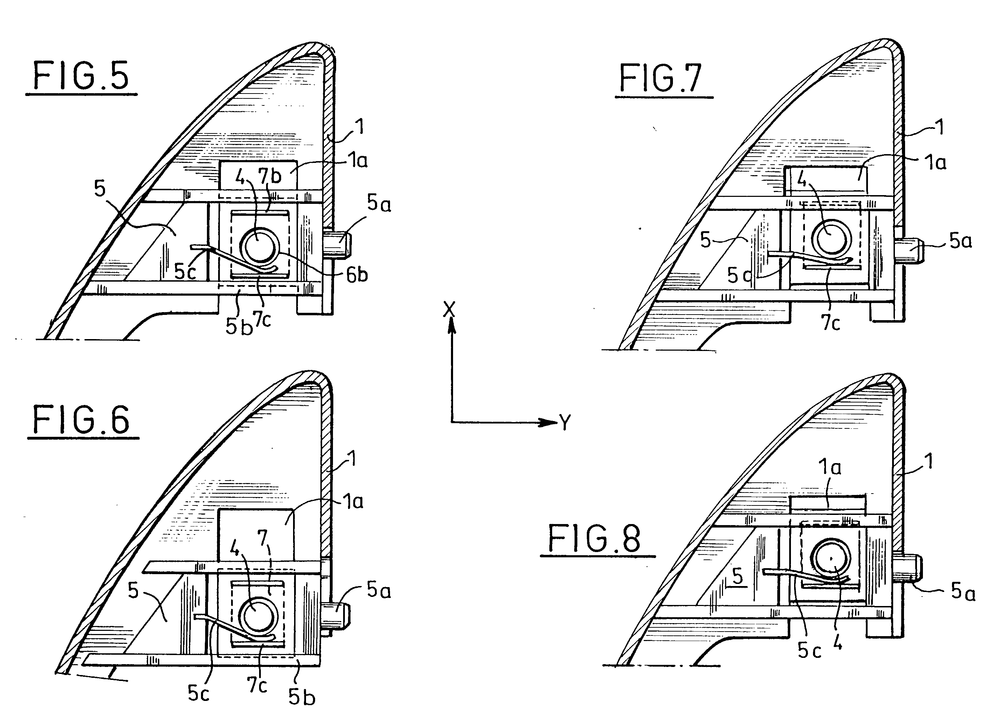

L'assemblage réalisé après réglage des jeux est représenté sur les figures 4 et 5. On peut voir sur la figure 5 que les parois latérales de l'élément profilé 5 sont en contact étroit avec les parois latérales intérieures de l'aile 1. Lors d'une élévation importante de température, correspondant par exemple à la cuisson de la peinture, il se produit une dilatation de l'aile 1, dilatation qui tend à écarter les parois latérales intérieures de l'aile 1 des parois latérales de l'élément profilé 5 permettant ainsi une libre dilatation longitudinale dans la direction des X positifs ; en effet, l'aile 1 est bloquée en translation dans la direction des X négatifs car fixée positivement au niveau de la porte du véhicule (non représentée sur les figures). L'aile 1 en position dilatée est représentée sur la figure 6. Cette libre dilatation est facilitée par le fait que l'aile 1 ne repose pas directement sur le support métallique 2 au niveau du trou 2a comme on l'a vu ci-dessus. Cette dilatation entraîne par ailleurs la sortie du téton Sa hors du clip constitué par la seconde rainure 1b convergente disposée sur la paroi latérale correspondante de l'aile 1. En effet, la seconde rainure 1b est entraînée dans la direction des X positifs par le mouvement de l'aile 1 par rapport au support métallique 2, mouvement résultant de la dilatation. Au contraire, le téton 5a est immobilisé par rapport au support métallique 2 car solidaire de l'élément profilé 5 lui-même bloqué en translation dans la direction des X positifs par sa butée 5b en appui contre le patin 6 lui-même fixé au support 2 par l'intermédiaire de l'agrafe 7 et de la vis 4.

Lors du refroidissement, la seconde rainure 1b convergente va revenir petit à petit vers la position qu'elle occupait après le montage, qui est représentée sur la figure 5. Mais, dès que la rainure 1b entre en contact avec le téton 5a, elle entraîne ce dernier dans son mouvement de translation dans la direction des X négatifs, car le téton 5a est solidaire de l'élément profilé 5 lui-même mobile en translation dans la direction des X négatifs par rapport au patin 6 fixé sur le support métallique 2. En effet, la translation de l'élément profilé 5 dans la direction de l'axe des X négatifs n'est pas empêchée par une butée positive comme c'est le cas dans l'autre sens avec la butée 5b, mais simplement freinée par la force de rappel de la lame ressort 5c solidaire de l'élément profilé 5 et en appui contre la grande aile 7c de l'agrafe 7 qui est encastrée dans le patin 6. Or, comme la force de rappel de la lame élastique 5c est inférieure à la force nécessaire au clipsage du téton 5a dans la seconde rainure 1b, on assiste d'abord à la translation de l'élément profilé 5 par rapport au patin 6. Cette translation s'arrêtera lorsque la lame 5c viendra en contact avec une butée issue par exemple de moulage sur l'élément profilé 5. Il s'ensuit qu'en fin de refroidissement, et bien que l'aile 1 ait retrouvée sa position initiale correspondant à la figure 5, l'élément profilé 5 est, lui, décalé dans la direction des X négatifs d'une valeur égale à la course autorisée du patin 6 par rapport à l'élément profilé 5. Cette position est représentée sur la figure 7 où il apparaît que le téton 5a n'est pas tout à fait clipsé dans la seconde rainure 1b.

Or, comme on a déjà vu plus haut, le plastique de l'aile 1 subit, après retour à la température ambiante, un retrait supplémentaire qui provoque une diminution des dimensions de l'aile 1 par rapport aux dimensions avant chauffage. Comme l'aile 1 est fixée au niveau de la porte du véhicule (non représentée sur les figures) située dans la direction des X négatifs, à l'opposé du dispositif de fixation 3, le retrait supplémentaire va se traduire par un déplacement supplémentaire de l'aile 1 et par suite de la seconde rainure 1b dans la direction des X négatifs, complétant ainsi le clipsage dudit téton 5a dans ladite rainure 1b pour atteindre la position représentée sur la figure 8. La mobilité supplémentaire procurée à l'aile 1, par rapport au support métallique 2, par la course du patin 6 permet donc de compenser le retrait supplémentaire du plastique, après refroidissement. Le rôle des moyens élastiques, et en particulier de la lame 5c est d'assurer que le patin 6 soit bien en butée 5b en fond de rainure au moment du montage du dispositif de fixation 3 sur le support métallique 2 lors du montage de l'aile 1.

## Revendications

1. Dispositif de retenue d'un élément plastique (1) de carrosserie sur un support métallique (2) dont le coefficient de dilatation est inférieur à celui dudit élément plastique (1), dispositif du type comportant un élément profilé (5) monté à l'intérieur de l'élément plastique (1) et relié au support métallique (2) par l'intermédiaire de moyens de liaison (6) permettant un déplacement dudit élément profilé (5) par rapport audit support métallique (2), lesdits moyens de liaison étant constitués par un patin (6) fixé sur le support métallique (2), l'élément profilé (5) étant monté en translation sur ledit patin (6), caractérisé en ce que ledit élément profilé (5) est rappelé contre une butée (5b) appartenant audit élément profilé (5) par des moyens élastiques (5c), ladite butée (5b) bloquant en translation ledit élément profilé (5) dans la direction de dilatation de l'élément plastique (1).

2. Dispositif de retenue selon la revendication précédente, caractérisé en ce que le patin (6) dépasse de la face inférieure de l'élément profilé (5) par une languette (6a) destinée à rentrer dans une première rainure (la) pratiquée sur la partie de l'élément plastique (1) assurant la fixation sur le support métallique (2).

3. Dispositif de retenue selon l'une quelconque des revendications 1 ou 2, caractérisé en ce que l'élément profilé (5) comporte un tenon (5a) destiné à venir se clipser au fond d'une seconde rainure (1b) convergente pratiquée sur la paroi correspondante de l'élément plastique (1).

4. Dispositif de retenue selon l'une quelconque des revendications 1 à 3, caractérisé en ce que les moyens élastiques sont constitués par une lame élastique (5c) réalisée d'une seule pièce avec l'élément profilé (5), ladite lame élastique (5c) coopérant avec une protubérance située à la surface du patin (6).

5. Dispositif de retenue selon l'une quelconque des revendications 1 à 4, caractérisé en ce que l'élément profilé (5) est monté à translation sur le patin (6) par l'intermédiaire d'une queue d'aronde (6c).

6. Dispositif de retenue selon l'une quelconque des revendications 1 à 5, caractérisé en ce que le patin (6) est fixé sur le support métallique (2) au moyen d'une vis (4) traversant un trou (2a) dudit support métallique (2) pour se visser dans un trou fileté (6b) pratiqué dans ledit patin (6).

## Claims

1. A device for retaining a plastic bodywork member (I) on a metal support (2) whose coefficient of expansion is lower than that of the plastic member (1), of the type comprising a profiled member (5) mounted within the plastic member (1) and connected to the metal support (2) by means of connection means (6) enabling a displacement of the profiled member (5) with respect to the metal support (2), these connection means being formed by a shoe (6) secured to the metal support (2), the profiled member (5) being mounted in translation on the shoe (6), characterised in that the profiled member (5) is recalled against an abutment (5b) belonging to the profiled member (5) by elastic means (5c), the abutment (5b) locking any translation of the profiled member (5) in the direction of expansion of the plastic member (1).

2. A retaining device as claimed in the preceding claim, characterised in that the shoe (6) projects beyond the lower surface of the profiled member (5) by means of a tongue (6a) adapted to be fitted in a first groove (1a) provided on the portion of the plastic member (1) ensuring fastening on the metal support (2).

3. A retaining device as claimed in any one of claims 1 and 2, characterised in that the profiled member (5) comprises a tenon (5a) adapted to be clipped into the base of a second convergent groove (1b) provided on the corresponding wall of the plastic member (1).

4. A retaining device as claimed in any one of claims 1 to 3, characterised in that the elastic means are formed by an elastic blade (5c) made in one piece with the profiled member (5), which elastic blade (5c) cooperates with a projection disposed on the surface of the shoe (6).

5. A retaining device as claimed in any one of claims 1 to 4, characterised in that the profiled member (5) is mounted in translation on the shoe (6) by means of a dovetail (6c).

6. A retaining device as claimed in any one of claims 1 to 5, characterised in that the shoe (6) is fixed to the metal support (2) by means of a screw (4) passing through a hole (2a) of the metal support (2) in order to be screwed into a threaded hole (6b) provided in this shoe (6).

## Patentansprüche

1. Vorrichtung zur Befestigung eines Kunststoffteils (1) einer Karosserie auf einem Metallträger (2), dessen Ausdehnungskoeffizient kleiner als derjenige des Kunststoffteils (1) ist, wobei die Vorrichtung ein Profilteil (5) umfaßt, das im Innern des Kunststoffteils (1) montiert und mit dem Metallträger (2) durch Verbindungsmittel (6) verbunden ist, die eine Verschiebung dieses Profilteils (5) in Bezug auf den Metallträger (2) gestatten, wobei die Verbindungsmittel aus einem auf dem Metallträger (2) befestigten Gleitstück (6) bestehen und wobei das Profilteil (5) verschiebbar auf diesem Gleitstück (6) montiert ist, dadurch gekennzeichnet, daß das Profilteil (5) durch elastische Mittel (5c) gegen einen Anschlag (5b), der zum Profilteil (5) gehört, rückgestellt wird, wobei dieser Anschlag (5b) das Profilteil (5) hinsichtlich einer Verschiebung in der Ausdehnungsrichtung des Kunststoffteils (1) blockiert.

2. Befestigungsvorrichtung nach dem vorhergehenden Anspruch, dadurch gekennzeichnet, daß das Gleitstück (6) aus der Unterseite des Profilteils (5) mittels einer Zunge (6a) herausragt, die dazu bestimmt ist, in einen ersten Schlitz (1a) eingeschoben zu werden, der an dem Teil des Kunststoffteils (1) vorgesehen ist, welcher die Befestigung auf dem Metallträger (2) gewährleistet.

3. Befestigungsvorrichtung nach einem der Ansprüche 1 oder 2, dadurch gekennzeichnet, daß das Profilteil (5) einen Zapfen (5a) aufweist, der dazu bestimmt ist, im Innern eines zweiten, konvergierenden Schlitzes (1b), der an der entsprechenden Wand des Kunststoffteils (1) vorgesehen ist, verrastet zu werden.

4. Befestigungsvorrichtung nach einem der Ansprüche 1 bis 3, dadurch gekennzeichnet, daß die elastischen Mittel aus einem Federblatt (5c) bestehen, das einstückig mit dem Profilteil (5) gefertigt ist, wobei dieses Federblatt (5c) mit einem Vorsprung zusammenwirkt, der sich auf der Oberfläche des Gleitstücks (6) befindet.

5. Befestigungsvorrichtung nach einem der Ansprüche 1 bis 4, dadurch gekennzeichnet, daß das Profilteil (5) mittels eines Schwalbenschwanzes (6c) verschiebbar auf dem Gleitstück (6) montiert ist.

6. Befestigungsvorrichtung nach einem der Ansprüche 1 bis 5, dadurch gekennzeichnet, daß das Gleitstück (6) auf dem Metallträger (2) mittels einer Schraube (4) befestigt wird, die ein Loch (2a) dieses Metallträgers (2) durchsetzt, um in eine in dem Gleitstück (6) vorgesehene Gewindebohrung (6b) eingeschraubt zu werden.
